# EUROPÄISCHE PATENTSCHRIFT

(11) **EP 1 216 550 B1**
(45) Veröffentlichungstag und Bekanntmachung des Hinweises auf die Patenterteilung: **13.09.2006**
(21) Anmeldenummer: 00967796.4
(22) Anmeldetag: 26.09.2000
(51) Int. Cl.: H04L 12/413, B60R 16/02, H04L 12/40

(54) **SCHUTZSCHALTUNG FÜR EIN ZUGRIFFSARBITRIERTES BUSSYSTEM-NETZWERK**
PROTECTION CIRCUIT FOR AN ACCESS-ARBITRATED BUS SYSTEM NETWORK
CIRCUIT DE PROTECTION D'UN RESEAU SYSTEME A BUS D'ACCES ALEATOIRE

(30) Priorität: 30.09.1999 DE 19946993
(43) Veröffentlichungstag der Anmeldung: 26.06.2002
(73) Patentinhaber: Infineon Technologies AG, 81669 München (DE)
(72) Erfinder: PECHLANER, Andreas, 83547 Babensham (DE); KERN, Hermann, 82291 Mammendorf (DE); KEIL, Mario, 81549 München (DE); BARRENSCHEEN, Jens, 81669 München (DE)
(74) Vertreter: Charles, Glyndwr
(86) Internationale Anmeldenummer: PCT/EP2000/009412
(87) Internationale Veröffentlichungsnummer: WO 2001/024013

(56) Entgegenhaltungen:
- WO-A-95/24087
- DE-A- 19 611 944
- US-A- 5 534 848
- US-A- 5 903 565

## Beschreibung

Die Erfindung betrifft eine Schutzschaltung für ein zugriffsarbitriertes Bussystem-Netzwerk zur Trennung eines fehlerhaften Teilnetzwerkes von dem Gesamtnetzwerk.

Ein Bus besteht aus mehreren parallelen Leitungen zur Datenübertragung, die verschiedene Funktionseinheiten in einem Multiplexbetrieb verbinden. An einem Bus können mehrere Funktionseinheiten gleichzeitig Daten empfangen, jedoch kann zu einem bestimmten Zeitpunkt nur eine Funktionseinheit als Sender von Informationsdaten dienen. Ein zugriffsarbitriertes Bussystem ist ein Bussystem, bei dem mehrere Teilnehmer ein Senderecht zum Senden auf den Bus besitzen, wobei die aktuelle Sendeberechtigung durch den Buszugriff festgelegt wird. Beispiele für zugriffsarbitrierte Bussysteme sind CAN-Bussysteme (CAN: Controller Area Network), J 1850-Bussysteme oder Bussysteme, die nach dem CSMA-Verfahren arbeiten. Das CSMA-Verfahren (CSMA: Carrier Sense Multiple Access) ist ein Zugangsverfahren für den gleichberechtigten Zugang zu mehreren an dem Bus angeschlossener Stationen bzw. Steuerknoten.

Das CAN-Bussystem ist ein flächendeckendes Bussystem-Netzwerk zur Verbindung von dezentral angeordneten Steuerknoten, das insbesondere in Fahrzeugen zunehmend eingesetzt wird. Die einzelnen Steuerknoten sind über das CAN-Bussystem miteinander verbunden und können über die Busleitungen Daten-Rahmen (Frames) austauschen. Die Daten-Rahmen weisen dabei eine funktionelle Identifizierung auf, welche die angesprochene Fahrzeugfunktion, wie Öl, Bremse, Licht oder dergleichen kennzeichnet. Eine Möglichkeit zur Fehlerüberwachung besteht darin, einen bestimmter CAN-Steuerknoten festzustellen, der zur Steuerung einer bestimmten Fahrzeug-Steuerfunktion vorgesehen ist und die Busleitungen dahingehend überwacht, ob ein zugehöriger Datenrahmen für diese Funktion anliegt. Falls der CAN-Steuerknoten die benötigte Information innerhalb eines bestimmten Zeitraumes nicht erhält, wird ein Notfallbetrieb aktiviert.

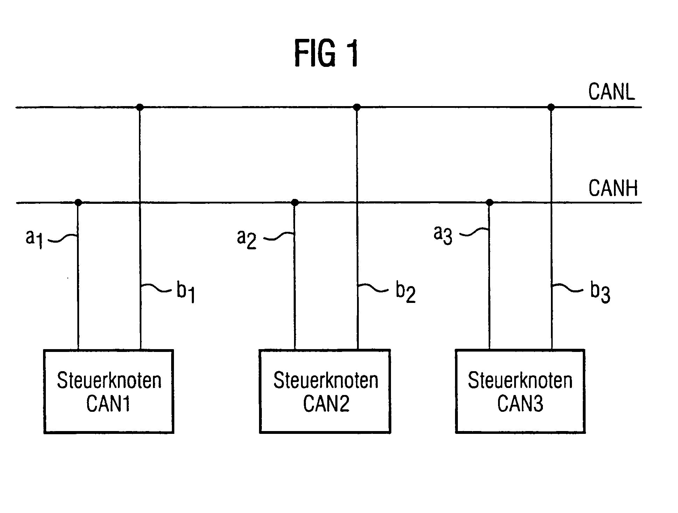

Figur 1 zeigt ein CAN-Bussystem nach dem Stand der Technik. Wie nach dem in Figur 1 gezeigten Beispiel besteht das CAN-Bussystem aus drei CAN-Steuerknoten CAN1, CAN2, CAN3, die über Anschlußleitungen a1, b1, a2, b2, a3, b3 mit einer ersten CAN-Busleitung mit niedrigen Pegel CANL und einer zweiten CAN-Busleitung mit hohem Pegel CANH verbunden sind. Der Spannungspegelunterschied zwischen der hoch-pegeligen Busleitung CANH und der niedrig-pegeligen Busleitung CANL gibt die übertragene Information wieder. Sobald die Pegeldifferenz einen bestimmten Spannungsschwellenwert überschreitet, wird dies als ein logisch hohes Bit interpretiert und sobald die Spannungspegeldifferenz einen Schwellenwert unterschreitet, wird dies als ein logisch niedriges Bit interpretiert.

In dem CAN-Bussystem können verschiedene Fehlerzustände auftreten, nämlich ein Kurzschluß zwischen den beiden CAN-Busleitungen, ein Kurzschluß einer der beiden Busleitungen CANL oder CANH nach Masse sowie ein Kurzschluß einer der beiden Busleitungen CANL, CANH zu einer Versorgungsspannung V_{BB}. Ist das CAN-Bussystem nach dem Stand der Technik, wie es in Figur 1 gezeigt ist, in einem Kraftfahrzeug angebracht, können die verschiedenen Fehlerzustände durch einen Unfall verursacht werden. Ist beispielsweise der Steuerknoten CAN1 ein Steuerknoten für einen Abstandsradar, der sich in der Stoßstange des Fahrzeuges befindet, kann es bei einem Auffahrunfall zu einem Kurzschluß zwischen den beiden Anschlußleitungen a1, b1 kommen. Dieser Fehlerzustand wird durch alle Steuerknoten im Bussystem erkannt, wodurch der weitere Datenausstausch über den Bus verhindert wird.

Die US 5,903,565 beschreibt einen 6-fach-CAN-Netzwerkkoppler mit angeschlossenem CAN-Kontroller. An jedem Anschluss kann ein Teilnetzwerk über eine logische Trennschaltung angeschlossen werden. An jedem Anschluss ist ferner eine Fehlererkennungseinrichtung zur Erkennung eines Fehlerzustandes an einem angeschlossenen Teilnetzwerk vorhanden. Die Fehlererkennungseinrichtungen sind mit Mitteln versehen, um den Spannungspegel und die logischen Zustände an den Anschlüssen zu überwachen und deren Abwesenheit von erwarteten Daten festzustellen. Die Trennschaltungen haben jeweils einen Trennsteuersignal-Eingang und die Fehlererkennungseinrichtungen liefern jeweils ein Fehlerangabesignal. Bei einer Fehlererkennung in einem Teilnetzwerk wird das Teilnetzwerk logisch abgetrennt.

Die WO 95/24087 A beschreibt ein ringförmiges CSMA/CD-Netzwerk, in welchem Stationen eingefügt sind, welche im Störungsfall ein gestörtes Teilnetzwerk zwischen zwei Stationen abtrennen können. Der Störungsfall wird von den Stationen durch Ausfallen von periodischen Präsenznachrichten von den benachbarten Stationen festgestellt.

Die DE 196 11 944 A beschreibt einen Schaltkreis mit fehlertoleranten Transceivern zum Anschluss zwischen einem CAN-Bus und einer CAN-Buseinheit. Der Schaltkreis weist Busfehler-Erkennungsmittel zum Diskriminieren von Busfehlerzuständen auf, wobei solche Busfehlerzustände als Kurzschluss der Busleitungen oder als Kurzschluss der Busleitungen mit Masse- oder Versorgungsspannung ausgebildet sind.

Die US 5,534,848 beschreibt einen seriellen J-1850-Netzwerk-Sternkoppler zum Anschluss von Teilnetzwerken über eine Schnittstellenschaltung. Jede Schnittstellenschaltung enthält eine Fehlererkennungseinrichtung für das darin angeschlossene Teilnetzwerk sowie eine Trennschaltung, um das angeschlossene Teilnetzwerk abzutrennen und die Trennung bei Beendigung des Fehlerzustandes wieder aufzuheben. Fehlerzustände sind hier als Kurzschlüsse der Busleitungen mit Masse- oder der Versorgungsspannung ausgebildet.

Es ist daher die Aufgabe der vorliegenden Erfindung eine Schutzschaltung für ein zugriffsarbitriertes Bussystem-Netzwerk zu schaffen, das bei Auftreten eines Kurzschlusses an einer Busleitung den Ausfall des gesamten Bussystem-Netzwerkes verhindert.

Diese Aufgabe wird erfindungsgemäß durch eine Schutzschaltung mit den in Patentanspruch 1 angegebenen Merkmalen gelöst.

Bevorzugte Weiterbildungen der erfindungsgemäßen Schutzschaltung ergeben sich aus den Unteransprüchen.

Die erfindungsgemäße Schutzschaltung weist einen ersten Transceiver zum Anschluß an ein erstes Teilnetzwerk, einen zweiten Transceiver zum zweiten Anschluß an ein zweites Teilnetzwerk und eine logische Trennschaltung auf, wobei der Transceiver-Empfänger des ersten Transceivers zur Erkennung eines Fehlerzustandes in dem ersten Teilnetzwerk und der Transceiver-Empfänger des zweiten Transceivers zur Erkennung eines Fehlerzustandes in dem zweiten Teilnetzwerk vorgesehen ist und wobei die logische Trennschaltung logische Eingänge, die mit den Transceiver-Empfängern verbunden sind, sowie logische Ausgänge aufweist, die mit den Transceiver-Sender verbunden sind.

Bei der erfindungsgemäßen Schutzschaltung besitzt die logische Trennschaltung zwei Empfangs-Multiplexer, deren erster Eingang jeweils an einen Transceiver-Empfänger angeschlossen ist und an deren zweiten Eingang jeweils ein logisch rezessives Übertragungssignal anliegt, und zwei Sende-Multiplexer, deren Ausgang jeweils an einen Transceiver-Sender angeschlossen ist, deren erster Eingang jeweils mit dem Ausgang des Empfangs-Multiplexers des Transceiver-Empfängers des anderen Transceivers verbunden ist und an deren zweiten Eingang jeweils ein logisch rezessives Übertragungssignal anliegt.

Dies bietet den besonderen Vorteil, daß die Trennung des als fehlerhaft erkannten Teilnetzwerkes mit einer sehr kurzen Reaktionszeit erfolgt, da direkt physikalische Spannungspegel überwacht werden und keine lang andauernden Übertragungsprotokollabfragen durchgeführt werden.

Die Trenneinrichtung ist eine logische Trennschaltung, die das als fehlerhaft erkannte Teilnetzwerk logisch von dem übrigen Bussystem-Netzwerk trennt.

Die logische Trennschaltung trennt das als fehlerhaft erkannte Teilnetzwerk von dem Bussystem vorzugsweise indem sie das dominante Übertragungssignal von oder zu dem Teilnetzwerk sperrt.

Bei einer bevorzugten Weiterbildung der erfindungsgemäßen Schutzschaltung ist die logische Trennschaltung über einen Fehlerbus mit den übrigen Steuerknoten des Bussystem-Netzwerkes verbunden, wobei die Steuerknoten über den Fehlerbus Informationsdaten erhalten, die eine Trennung des als fehlerhaft erkannten Teilnetzwerkes von dem gesamten Bussystem-Netzwerk anzeigen.

Bei einer bevorzugten Ausführungsform wird der erste Eingang des Sende-Multiplexers und der Ausgang des Empfangs-Multiplexers jeweils durch einen zwischengeschalteten Optokoppler galvanisch entkoppelt.

Die erfindungsgemäße Schutzschaltung wird vorzugsweise für ein CAN-Bussystem, ein J 1580-Bussystem oder ein CSMA-Bussystem vorgesehen.

Im weiteren werden bevorzugte Ausführungsformen der Schutzschaltung unter Bezugnahme auf die beigefügten Zeichnungen zur Erläuterung erfindungswesentlicher Merkmale beschrieben.

Es zeigen:
- Figur 1: ein CAN-Netzwerk nach dem Stand der Technik;
- Figur 2: ein CAN-Bussystem-Netzwerk mit eine Ausführungsform einer Schutzschaltung;
- Figur 3: ein CAN-Bussystem-Netzwerk mit einer Ausführungsform einer erfindungsgemäßen Schutzschaltung;
- Figur 4: die Trenneinrichtung zur Trennung der Teilnetzwerke der in Figur 3 gezeigten zweiten Ausführungsform der erfindungsgemäßen Schutzschaltung.

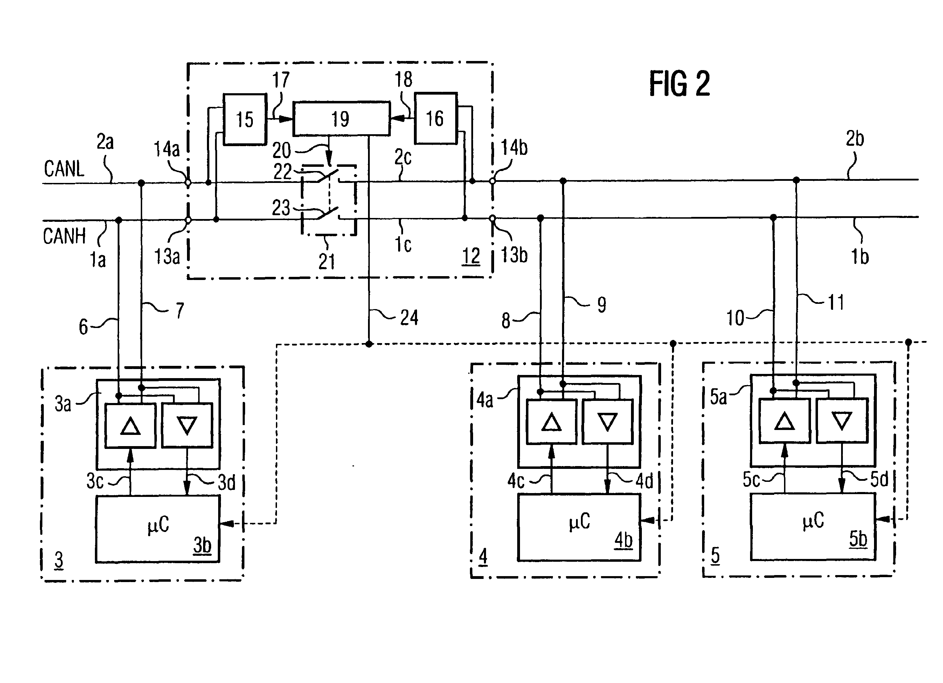

- Figur 2: stellt ein CAN-Bussystem-Netzwerk mit einer

### Ausführungsform einer Schutzschaltung dar.

Wie in Figur 2 zu erkennen, besteht das CAN-Bussystem-Netzwerk aus zwei CAN-Busleitungen ,nämlich einer hoch-pegeligen CAN-Busleitung 1a, 1b (CAN-H) und einer niedrig-pegeligen CAN-Busleitung 2a, 2b (CAN-L). Bei dem in Figur 2 gezeigten Beispiel weist das gesamte Bussystem-Netzwerk drei CAN-Steuerknoten 3, 4, 5 auf. Jeder der drei Steuerknoten 3, 4, 5 weist jeweils einen Transceiver 3a, 4a, 5a sowie einen Mikroprozessor 3b, 4b, 5b auf. Die Transceiver 3a, 4a, 5a bestehen jeweils aus einem Transceiver-Sender und einem Transceiver-Empfänger, wobei der Transceiver-Sender jeweils über eine Sendeleitung 3c, 4c, 5c und der Transceiver-Empfänger über eine Leitung 3d, 4d, 5d mit dem Mikroprozessor verbunden ist. Die CAN-Busleitungen 1a, 2a, 16, 2b sind über Steuerknoten-Anschlußleitungen 6, 7 mit dem Steuerknoten 3, über Anschlußleitungen 8, 9 mit dem Steuerknoten 4 und über Anschlußleitungen 10, 11 mit dem Steuerknoten 5 verbunden.

In die CAN-Busleitungen 1a, 1b, 2a, 2b ist eine Schutzschaltung 12 für das CAN-Bussystem-Netzwerk gemäß einer Ausführungsform geschaltet. Durch das Zwischenschalten der Schutzschaltung 12 in das Gesamt-Bussystem-Netzwerk wird dieses bei dem in Figur 2 gezeigten Beispiel in zwei Teilnetzwerke unterteilt. Das erste Teilnetzwerk besteht aus dem Steuerknoten 3, den Anschlußleitungen 6, 7 des Steuerknotens 3 sowie den CAN-Busleitungen 1a, 2a, an die Busleitungsanschlüsse 13a, 14a der Schutzschaltung 12 angeschlossen sind. Das zweite Teilnetzwerk wird durch die beiden CAN-Steuerknoten 4, 5 gebildet, die über Anschlußleitungen 8, 9 bzw. 10, 11 mit den CAN-Busleitungen 1b, 2b verbunden sind. Die CAN-Busleitungen 1b, 2b sind an CAN-Busleitungsanschlüsse 13b, 14b der erfindungsgemäßen Schutzschaltung 12 angeschlossen.

Bei der Schutzschaltung 12 gemäß dieser Ausführungsform weist die Fehlererkennungseinrichtung eine erste Fehlerzustandserfassungsschaltung 15 zur Erfassung eines Fehlerzustandes in dem ersten Teilnetzwerk und eine zweite Fehlerzustandserfassungsschaltung 16 zur Erfassung eines Fehlerzustandes in dem zweiten Teilnetzwerk auf. Die beiden Fehlerzustandserfassungsschaltungen 15, 16 sind ausgangsseitig über Leitungen 17, 18 mit einer Fehlererkennungs-Logikschaltung 19 verbunden. Die Fehlererkennungs-Logikschaltung 19 gibt bei Erfassung eines Fehlerzustandes in einem der beiden Teilnetzwerke durch eine der beiden Fehlerzustandserfassungsschaltungen 15, 16 ein Steuersignal über eine Steuer-Schaltleitung 20 an eine Schalteinrichtung 21 zum Schalten interner Busleitungen 1c, 2c innerhalb der Schutzschaltung 12 ab, wobei die internen Busleitungen 1c, 2c jeweils die Busleitungsanschlüsse 14a, 14b sowie 13a, 13b miteinander verbinden. Die Schalteinrichtung 21 weist mehrere parallel geschaltete Schalter 22, 23 auf, wobei für jede Busleitung 1c, 2c jeweils ein Schalter vorgesehen ist. Die Schalter 22, 23 sind vorzugsweise Halbleiterschalter die im abgeschalteten Zustand in beiden Signalrichtungen sperren. Die Halbleiterschalter bestehen vorzugsweise aus zwei antiseriell geschalteten MOSFET-Transistoren, deren Durchlaßwiderstand geringer als 10 Ω ist.

Die Fehlerzustandserfassungsschaltungen 15, 16 erfassen als einen ersten Fehlerzustand Kurzschlüsse zwischen den Leitungen eines Teilnetzwerkes, beispielsweise zwischen den Anschlußleitungen 6, 7 des Steuerknotens 3 in dem ersten Teilnetzwerk.

Bei dem in Figur 2 gezeigten Beispiel kann es sich bei dem ersten Teilnetzwerk um ein Teilnetzwerk handeln, das im äußeren Bereich einer Fahrzeugkarosserie angeordnet ist. Durch einen Unfall kann es dabei zu einem Kurzschluß zwischen den Anschlußleitungen 6, 7 des Steuerknotens 3 kommen. Dieser Kurzschluß wird durch die Fehlerzustandserfassungsschaltung 15 mittels (nicht dargestellter) Widerstände erfaßt. Die beiden Fehlerzustandserfassungsschaltungen 15, 16 erkennen zudem als einen zweiten Fehlerzustand einen Kurzschluß der Busleitungen der beiden Teilnetzwerke zur Masse bzw. Erde sowie einen Kurzschluß zwischen den Busleitungen der beiden Teilnetzwerke zu einer Versorgungsspannung V_{BB}.

Die beiden Fehlerzustandserfassungsschaltungen 15, 16 erfassen einen aufgetretenen Fehlerzustand in einem der beiden Teilnetzwerke durch direkte Überwachung physikalischer Spannungspegel und nicht über Bus-Datenprotokollabfragen. Hierdurch kann ein aufgetretener Fehlerzustand sehr schnell erfaßt werden und die beiden Teilnetzwerke werden durch die Schutzschaltung 12 innerhalb einer sehr kurzen Reaktionszeit von unter 10 µs voneinander getrennt.

Die Fehlererkennungs-Logikschaltung 19 erhält über die Steuerleitung 17, 18 Fehlererkennungssignale von den beiden Fehlerzustandserfassungsschaltungen 15, 16 und führt eine logische Oder-Operation durch. Sobald in einem der beiden Teilnetzwerke ein Fehlerzustand auftritt, werden beide Schalter 22, 23 der Schalteinrichtung 21 durch die Fehlererkennungs-Logikschaltung über die Schalt-Steuerleitung 20 geöffnet und die beiden Teilnetzwerke voneinander getrennt.

Nach dem Öffnen der beiden Schalter 22, 23 und der Trennung der beiden Teilnetzwerke kann die Fehlererkennungseinrichtung der Schutzschaltung 12 erkennen, in welchem der beiden Teilnetzwerke der Fehlerzustand aufgetreten ist. Gibt die Fehlerzustandserfassungsschaltung 15 nach dem Öffnen der beiden Schalter 22, 23 weiter ein Fehlerzustandserfassungssignal über die Leitung 17 an die Fehlererkennungs-Logikschaltung 19 ab, während gleichzeitig die Fehlerzustandserfassungsschaltung 16 kein Fehlererkennungssignal über die Fehlererkennungsleitung 18 an die Fehlererkennungs-Logikschaltung 19 abgibt, so erkennt die Fehlererkennungs-Logikschaltung 19, daß der Fehlerzustand in dem ersten Teilnetzwerk aufgetreten ist. Falls umgekehrt nach dem Öffnen der Schalter 22, 23 die Fehlerzustandserfassungsschaltung 15 keinen Fehlerzustand meldet, werden gleichzeitig die Fehlerzustandserfassungsschaltung 16 weiterhin einen Fehlerzustand meldet erkennt die Fehlererkennungs-Logikschaltung 19, daß der Fehler in dem zweiten Teilnetzwerk aufgetreten ist.

Die Fehlererkennungs-Logikschaltung 19 ist vorzugsweise über eine zusätzliche Fehlerbus-Leitung 24 mit den Mikroprozessoren 3b, 4b, 5b der CAN-Steuerknoten 3, 4, 5 verbunden. Über die Fehlerbusleitung 24 erhalten die Steuerknoten 3, 4, 5 in den beiden Teilnetzwerken Informationsdaten darüber, die die Trennung eines fehlerhaft erkannten Teilnetzwerkes von dem gesamten Bussystem-Netzwerk anzeigen. Bei einer Vielzahl von Teilnetzwerken werden die Steuerknoten zusätzlich darüber informiert, in welchem Teilnetzwerk der Fehlerzustand lokal aufgetreten ist.

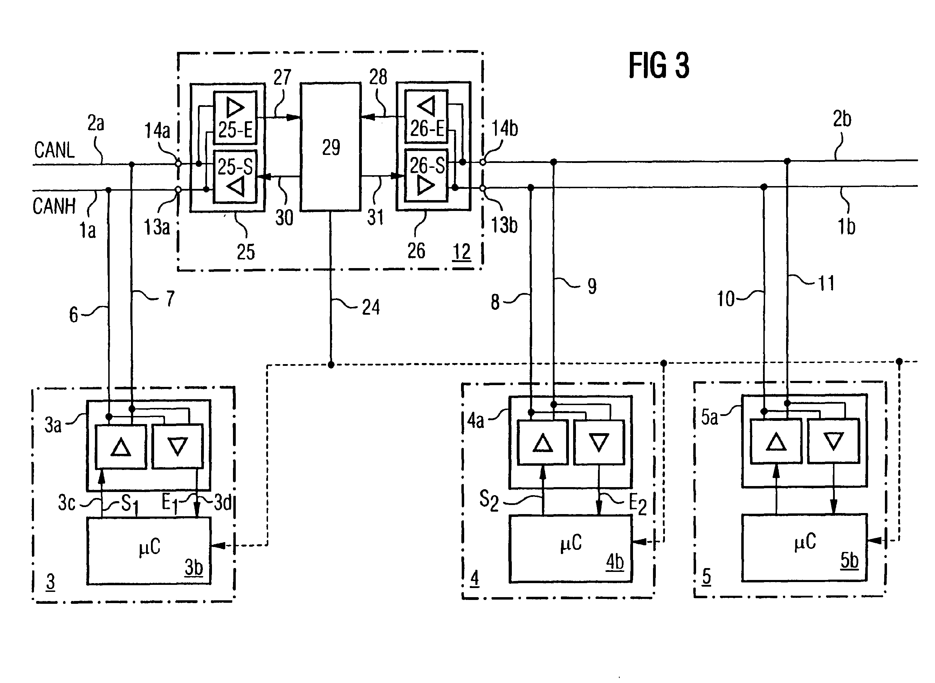

Figur 3 zeigt eine Ausführungsform einer erfindungsgemäßen Schutzschaltung 12. Bei der in Figur 3 gezeigten Ausführungsform der erfindungsgemäßen Schutzschaltung erfolgt die Trennung der beiden Teilnetzwerke nicht physikalisch durch Auftrennung der Busleitung, sondern durch eine logische Trennung der beiden Teilnetzwerke. Die Schutzschaltung 12 gemäß dieser Ausführungsform weist einen ersten Transceiver 25 zum Anschluß an die Busleitungen 1a, 2a des ersten Teilnetzwerkes über die Busleitungs-Anschlüsse 13a, 14a sowie einen zweiten Transceiver 26 zum Anschluß an die Busleitungen 1b, 2b des zweiten Teilnetzwerkes über die Busleitungsanschlüsse 13b, 14b auf. Die Transceiver 25, 26 weisen jeweils Transceiver-Senderteile 25-S, 26-S sowie Transceiver-Empfängerteile 25-E, 26-E auf. Die beiden Transceiver-Senderteile 25-S, 26-S sind über Leitungen 30, 31 mit einer logischen Trennschaltung 29 verbunden. Die Transceiver-Empfängerteile 25-E und 26-E der beiden Transceiver 25, 26 sind über Leitungen 27, 28 an die logische Trennschaltung 29 angeschlossen.

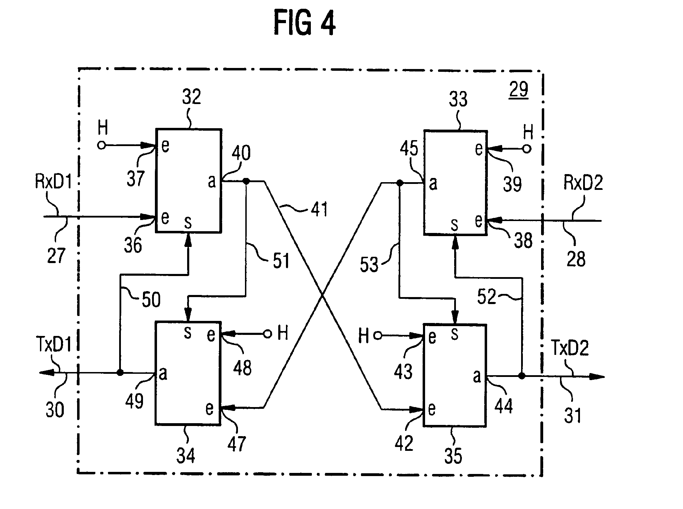

Figur 4 zeigt den schaltungstechnischen Aufbau einer der Ausführungsform der logischen Trennschaltung 29 bei Ausführungsform der erfindungsgemäßen Schutzschaltung 12, wie sie in Figur 3 dargestellt ist.

Die logische Trennschaltung 29 enthält vorzugsweise vier Multiplexer, nämlich zwei Empfangs-Multiplexer 32, 33 und zwei Sende-Multiplexer 34, 35. Jeder der Multiplexer 32, 33, 34, 35 weist jeweils zwei Signaleingänge, einen Signalausgang und einen Steuerleitungsanschluß auf. Der erste Signaleingang 36 des Empfangs-Multiplexers 32 ist über die Leitung 27 mit dem Transceiver-Empfängerteile 25-E verbunden, wobei an dem zweiten Signaleingang 37 ein rezessives Übertragungssignal des zu schützenden zugriffsarbitrierten Bussystem-Netzwerks anliegt.

Ein CAN-Netzwerk weist zwei Übertragungssignalzustände, nämlich einen logisch hoch-pegeligen rezessiven Übertragungssignalzustand und einen logisch niedrig-pegeligen dominanten Übertragungssignalzustand auf. Im Ruhezustand liegt der logisch hoch-pegelige rezessive Übertragungssignalzustand auf Busleitung vor, während bei der aktiven Datenübertragung sowohl der niedrig-pegelige dominante Übertragungssignalzustand als auch der hochpegelige Übertragungssignalzustand genutzt werden. An dem zweiten Signaleingang 37 des Empfangs-Multiplexers 32 liegt somit bei einem CAN-Bussystem ein logisch rezessives hoch-pegeliges Übertragungssignal an, das in Figur 4 mit einem logischen H angedeutet wird.

Der erste Signaleingang 38 des zweiten Empfangs-Multiplexers 33 ist über die Leitung 28 mit dem Transceiver-Empfängerteil 26-E verbunden. An dem zweiten Signaleingang 39 des zweiten Empfangs-Multiplexers 33 liegt ebenfalls ein logisch rezessives Datenübertragungssignal an.

Der Signalausgang 40 des ersten Empfangs-Multiplexers 33 ist über eine Leitung 41 mit dem ersten Signaleingang 42 des Sende-Multiplexers 35 verbunden, dessen zweiter Signaleingang 43 ein logisch rezessives Übertragungssignal empfängt. Der Signalausgang 44 des Sende-Multiplexers 35 ist über die Leitung 31 mit dem Transceiver-Empfängerteil 26-S verbunden.

Der Signalausgang 45 des Empfangs-Multiplexers 33 ist über eine Leitung 46 an den ersten Signaleingang 47 des Sende-Multiplexers 34 angeschlossen, dessen zweiter Signaleingang 48 ein logisch rezessives Übertragungssignal empfängt. Der Signalausgang 49 des Sende-Multiplexers 34 ist über die Leitung 30 mit dem Transceiver-Senderteil 25-S verbunden.

Der Empfangs-Multiplexer 32 wird über eine Steuerleitung 50 geschaltet, die an die Ausgangsleitung 30 des Sende-Multiplexers 34 angeschlossen ist. Der Sende-Multiplexer 34 wird seinerseits über eine Steuerleitung 51 gesteuert, die als Steuersignal das am Ausgangsanschluß 40 des Empfangs-Multiplexers 32 anliegende Signal empfängt.

Der Empfangs-Multiplexer 33 wird über eine Steuerleitung 52 gesteuert, die mit dem Ausgangsanschluß 44 des Sende-Multiplexers 35 verbunden ist. Der Sende-Multiplexer 35 empfängt sein Steuersignal über eine Steuerleitung 53, die an den Ausgangsanschluß 45 des Empfangs-Multiplexers 33 anliegt.

Der Empfangs-Multiplexer 32 empfängt über die Signalleitung 27 ein Empfangssignal RxD1 von dem Receiver 25. Der Empfangs-Multiplexer 33 empfängt über die Leitung 28 ein Empfangssignal RxD2 von dem Transceiver 26. Umgekehrt gibt der Sende-Multiplexer 34 über die Leitung 30 ein Sendesignal TxD1 an den Transceiver 25 ab und der Sende-Multiplexer 35 gibt über die Signalleitung 31 ein Sendesignal TxD2 an den Transceiver 26 ab.

Die folgende Tabelle zeigt die Sende- und Empfangssignale der logischen Trennschaltung 29 bei den verschiedenen Betriebsfällen B des Bussystems.

**Tabelle 1**

| Betriebsfall B | R×D1 | RxD2 | T×D1 | T×D2 |
|---|---|---|---|---|
| B1 Ruhezustand | 1 | 1 | 1 | 1 |
| B2 Sender in Teilnetzwerk A | 0 | 0 | ① | 0 |
| B3 Sender in Teilnetzwerk B | 0 | 0 | 0 | ① |
| B4 Sender in beiden Teilnetzwerken | 0 | 0 | ① | ① |
| B5 Fehler in Teilnetzwerk A | 1/0 | x | ① | ① |
| B6 Fehler in Teilnetzwerk B | x | 1/0 | ① | ① |

Dabei bedeutet ① ein zur Vermeidung eines Dead-Lock-Zustandes abgegebenes hochpegeliges rezessives Signal. Eine ⓪ tritt als Folge der Übertragung eines dominanten Buszustandes auf.

Im Betriebsfall B1 befindet sich das gesamte Bussystem im Ruhezustand. Im Betriebsfall B2 sendet ein Steuerknoten in einen ersten Teilnetzwerk A, so daß der Empfangs-Multiplexer 32 über die Leitung 27 ein dominantes niedrig-pegeliges Sendesignal 0 erhält, das über die Leitung 31 als Sendesignal TxD2 weitergeleitet wird.

Sendet umgekehrt das zweite Teilnetzwerk B erhält die logische Trennschaltung 29 über die Schaltung 28 ein logisch dominantes 0-Signal und leitet es über die Leitung 30 über den Transceiver 25 an das erste Teilnetzwerk A weiter. Aus den Betriebsfällen B4, B5, B6 erfolgt die logische Trennung der beiden Teilnetzwerke A, B dadurch, daß keine dominanten logisch niedrig-pegeligen Datenübertragungssignale durch die Trennschaltung 29 durchgeschaltet werden, sondern vielmehr zwangsläufig ein Sperrsignal erzeugt wird. Dabei werden die Signalausgänge 44, 49 der beiden Sende-Multiplexer 35, 34 auf das rezessive hoch-pegelige Datenübertragungssignal gesetzt.

Die folgende Tabelle zeigt die Sende- und Empfangssignale in einem Steuerknoten 3 des ersten Teilnetzwerkes A und einem Steuerknoten 4 in einem zweiten Teilnetzwerk B bei den verschiedenen Betriebsfällen B..

Der Steuerknoten 3 sendet eine Sendesignal S₁ und empfängt ein Empfangssignal E₁. Der Steuerknoten 4 sendet ein Sendesignal S₂ und empfängt ein Empfangssignal E₂.

**Tabelle 2**

| Betriebsfall B | S₁ | S₂ | E₁ | E₂ |
|---|---|---|---|---|
| B1 Ruhezustand | 1 | 1 | 1 | 1 |
| B2 Sender in Teilnetzwerk A | 0 | 1 | 0 | 0 |
| B3 Sender in Teilnetzwerk B | 1 | 0 | 0 | 0 |
| B4 Sender in beiden Teilnetzwerken | 0 | 0 | 0 | 0 |
| B5 Fehler in Teilnetzwerk A | x | 0/1 | x | S₂ |
| B6 Fehler in Teilnetzwerk B | 0/1 | x | S₁ | x |

Bei einer bevorzugten Weiterbildung der in Figur 4 gezeigten logischen Trennschaltung 29 wird der Signaleingang 42 des Sende-Multiplexers 35 mit dem Signalausgang 40 des Empfangs-Multiplexers 32 galvanisch entkoppelt verbunden. Ferner wird der erste Signaleingang 47 des Sende-Multiplexers 34 und der Signalausgang 45 des Empfangs-Multiplexers 33 galvanisch entkoppelt verbunden. Die galvanische Entkoppelung der Verbindungsleitungen 41, 46 erfolgt dabei vorzugsweise durch zwischengeschaltete Optokoppler. Die galvanische Trennung der beiden Teilnetzwerke durch die Optokoppler hat insbesondere den Vorteil, daß in den verschiedenen Teilnetzwerken unterschiedliche Versorgungsspannungen V_{BB} für die Busleitungen vorgesehen sein können.

Die logische Trennschaltung 29 ist über eine Fehlerbusleitung 24 zur Übertragung von Informationsdaten mit den Steuerknoten 3, 4, 5 verbunden.

Wie man aus Figur 2 und Figur 3 erkennen kann, sind beide Ausführungsformen der Schutzschaltung symmetrisch ausgebaut, wodurch die Schutzschaltung 12 in Busleitungen 1, 2 eingesetzt werden kann, wobei der Busleitungsanschluß 14a mit dem Busleitungsanschluß 14b und der Busleitungsanschluß 13a mit dem Busleitungsanschluß 13b vertauscht werden kann. Vorzugsweise können auch die Busleitungsanschlüsse 13a, 14a sowie die Busleitungsanschlüsse 13b, 14b beim Einsetzen der Schutzschaltung 12 in das Bussystem-Netzwerk vertauscht werden. Dies bietet als besonderen Vorteil eine einfache Montage.

Die Schutzschaltung 12 zeichnet sich durch eine sehr geringe schaltungstechnische Komplexität aus, die einen Aufbau mit Standardbausteinen erleichtert. Die Schutzschaltung ist universell bei allen zugriffsarbitrierten Bussystem-Netzwerken, wie einem CAN-Bussystem, einem J 1580-Bussystem oder einem CSMA-Bussystem einsetzbar. Sie kann an beliebigen Stellen innerhalb des Bussystem-Netzwerkes zwischengeschaltet werden. Durch die direkte Überwachung des physikalischen Pegelzustandes der Busleitungen zeichnet sich die Schutzschaltung 12 durch eine sehr geringe Reaktionszeit von weniger als 10 µs aus. Ein weiterer Vorteil der Schutzschaltung liegt darin, daß das fehlerhafte Teilnetzwerk lokalisierbar ist, wobei dies im übrigen Bussystem-Steuerknoten über einen Fehlerbus 24 mitgeteilt wird. Nach Beendigung des Fehlerzustandes hebt die Schutzschaltung 12 die Trennung der Teilnetzwerke automatisch wieder auf.

### Bezugszeichenliste:

- 1a, 1b, 1c: Busleitung
- 2a, 2b, 2c: Busleitung
- 3: Steuerknoten
- 4: Steuerknoten
- 5: Steuerknoten
- 3a: Transceiver
- 4a: Transceiver
- 5a: Transceiver
- 3b: Mikrocomputer
- 4b: Mikrocomputer
- 5b: Mikrocomputer
- 3c: Sendeleiter
- 4c: Sendeleiter
- 5c: Sendeleiter
- 3d: Empfangsleitung
- 4d: Empfangsleitung
- 5d: Empfangsleitung
- 6: Anschlußleitungen
- 7: Anschlußleitungen
- 8: Anschlußleitungen
- 9: Anschlußleitungen
- 10: Anschlußleitungen
- 11: Anschlußleitungen
- 12: Schutzschaltung
- 13a: Busleitungsanschlüsse
- 13b: Busleitungsanschlüsse
- 14a: Busleitungsanschlüsse
- 14b: Busleitungsanschlüsse
- 15: Fehlerzustandserfassungsschaltung
- 16: Fehlerzustandserfassungsschaltung
- 17: Fehlerzustandserfassungsleitung
- 18: Fehlerzustandserfassungsleitung
- 19: Fehlererkennungs-Logikschaltung
- 20: Schaltsteuerleitung
- 21: Schalteinrichtung
- 22: Schalter
- 23: Schalter
- 24: Fehlerbus
- 25: Transceiver
- 26: Transceiver
- 27: Leitung
- 28: Leitung
- 29: Logische Trennschaltung
- 30: Leiter
- 31: Leiter
- 32: Empfangs-Multiplexer
- 33: Empfangs-Multiplexer
- 34: Sende-Multiplexer
- 35: Sende-Multiplexer
- 36: Signaleingang
- 37: Signaleingang
- 38: Signaleingang
- 39: Signaleingang
- 40: Signalausgang
- 41: Leitung
- 42: Signaleingang
- 43: Signaleingang
- 44: Signalausgang
- 45: Signalausgang
- 46: Leitung
- 47: Signaleingang
- 48: Signaleingang
- 49: Signalausgang
- 50: Multiplexer-Steuerleitung
- 51: Multiplexer-Steuerleitung
- 52: Multiplexer-Steuerleitung
- 53: Multiplexer-Steuerleitung

## Patentansprüche

1. Schutzschaltung für ein zugriffsarbitriertes Bussystem-Netzwerk mit:
einer logischen Trennschaltung (29) zur logischen Trennung eines Teilnetzwerkes von dem gesamten Bussystem-Netzwerk, wenn ein Fehlerzustand in dem Teilnetzwerk erkannt wird,
einem ersten Transceiver (25) zum Anschluß an ein erstes Teilnetzwerk, und
einem zweiten Transceiver (26) zum Anschluß an ein zweites Teilnetzwerk,
wobei der Transceiver-Empfänger (25-E) des ersten Transceivers (25) zur Erkennung eines Fehlerzustandes in dem ersten Teilnetzwerk und der Transceiver-Empfänger (26-E) des zweiten Transceivers (26) zur Erkennung eines Fehlerzustandes in dem zweiten Teilnetzwerk vorgesehen ist,
wobei die logische Trennschaltung (29) logische Signaleingänge zum Anschluß an die Transceiver-Empfänger (25-E, 26-E) sowie logische Signalausgänge zum Anschluß an die Transceiver-Sender (25-S, 26-S) besitzt,
wobei die logische Trennschaltung (29) zwei Empfangs-Multiplexer (32, 33), deren erster Signaleingang (36, 38) jeweils an einen Transceiver-Empfänger (25-E, 26-E) angeschlossen ist und deren zweiter Signaleingang (37, 39) jeweils ein logisch rezessives Übertragungssignal empfängt, und zwei Sende-Multiplexer (34, 35) aufweist, deren Signalausgang (49, 44) jeweils an einen Transceiver-Sender (25-S, 26-S) angeschlossen ist und deren erster Signaleingang (47, 42) jeweils mit einem Signalausgang (40, 45) des Empfangs-Multiplexers (32, 33) für den Transceiver-Empfänger (25-E, 26-E) des anderen Transceivers angeschlossen ist, wobei an den zweiten Signaleingang der beiden Sende-Multiplexer (34, 35) jeweils ein logisch rezessives Übertragungssignal anliegt.

2. Schutzschaltung nach Anspruch 1,
**dadurch gekennzeichnet,**
**daß** die logische Trennschaltung (29) das fehlerhaft erkannte Teilnetzwerk von dem Bussystem trennt, indem sie ein dominantes Übertragungssignal von oder zu dem Teilnetzwerk sperrt.

3. Schutzschaltung nach Anspruch 1 oder 2,
**dadurch gekennzeichnet,**
**daß** die logische Trennschaltung (29) über einen Fehlerbus (24) mit Steuerknoten (3, 4, 5) des Bussystem-Netzwerkes verbunden ist, wobei die Steuerknoten (3, 4, 5) über den Fehlerbus (24) Informationsdaten erhalten, die eine Trennung des fehlerhaft erkannten Teilnetzwerkes von dem gesamten Bussystem-Netzwerk anzeigen.

4. Schutzschaltung nach einem der vorhergehenden Ansprüche,
**dadurch gekennzeichnet,**
**daß** der erste Signaleingang (47, 42) der Sende-Multiplexer (34, 35) jeweils mit den Signalausgängen der Empfangs-Multiplexer (32, 33) galvanisch entkoppelt verbunden ist.

5. Schutzschaltung nach einem der vorangehenden Ansprüche,
**dadurch gekennzeichnet,**
**daß** das zugriffsarbitrierte Bussystem ein CAN-Bussystem, ein J 1850-Bussystem oder ein CSMA-Bussystem ist.

## Claims

1. Protective circuit for an access arbitrated bus system network having:
a logical isolation circuit (29) for logically isolating a network section from the overall bus system network when a fault state is recognized in the network section,
a first transceiver (25) for connection to a first network section, and
a second transceiver (26) for connection to a second network section,
where the transceiver receiver (25-E) in the first transceiver (25) is provided for recognizing a fault state in the first network section and the transceiver receiver (26-E) in the second transceiver (26) is provided for recognizing a fault state in the second network section,
where the logical isolation circuit (29) has logical signal inputs for connection to the transceiver receivers (25-E, 26-E) and logical signal outputs for connection to the transceiver transmitters (25-S, 26-S),
where the logical isolation circuit (29) has two reception multiplexers (32, 33), whose first signal input (36, 38) is respectively connected to a transceiver receiver (25-E, 26-E) and whose second signal input (37, 39) respectively receives a logically recessive transmission signal, and two transmission multiplexers (34, 35), whose signal output (49, 44) is respectively connected two a transceiver transmitter (25-S, 26-S) and whose first signal input (47, 42) is respectively connected to a signal output (40, 45) of the reception multiplexer (32, 33) for the transceiver receiver (25-E, 26-E) in the other transceiver, with a respective logically recessive transmission signal being applied to the second signal input of the two transmission multiplexers (34, 35).

2. Protective circuit according to Claim 1,
**characterized**
**in that** the logical isolation circuit (29) isolates the network section recognized as faulty from the bus system by blocking a dominant transmission signal from or to the network section.

3. Protective circuit according to Claim 1 or 2,
**characterized**
**in that** the logical isolation circuit (29) is connected to control nodes (3, 4, 5) in the bus system network via a fault bus (24), the fault bus (24) supplying the control nodes (3, 4, 5) with information data which indicate that the network section recognized as faulty has been isolated from the overall bus system network.

4. Protective circuit according to one of the preceding claims,
**characterized**
**in that** the first signal input (47, 42) of the transmission multiplexers (34, 35) is respectively connected to the signal outputs of the reception multiplexers (32, 33) with DC isolation.

5. Protective circuit according to one of the preceding claims,
**characterized**
**in that** the access arbitrated bus system is a CAN bus system, a J 1850 bus system or a CSMA bus system.

## Revendications

1. Circuit protecteur pour un réseau de système de bus à accès arbitré comprenant :
un circuit d'isolation logique (29) pour isoler logiquement un sous-réseau du réseau de système de bus global lorsqu'un état d'erreur est reconnu dans le sous-réseau,
un premier récepteur-émetteur (25) pour la connexion à un premier sous-réseau,
un deuxième récepteur-émetteur (26) pour la connexion à un deuxième sous-réseau,
le récepteur (25-E) du premier récepteur-émetteur (25) étant prévu pour reconnaître un état d'erreur dans le premier sous-réseau et le récepteur (26-E) du deuxième récepteur-émetteur (26) pour reconnaître un état d'erreur dans le deuxième sous-réseau,
le circuit d'isolation (29) logique possédant des entrées logiques de signal pour la connexion avec les récepteurs des récepteur-émetteurs (25-E, 26-E) ainsi que des sorties logiques de signal pour la connexion avec les émetteurs des récepteur-émetteurs (25-S, 26-S),
le circuit d'isolation logique (29) comprenant deux multiplexeurs de réception (32, 33) dont la première entrée de signal (36, 38) est raccordée à chaque fois à un récepteur de récepteur-émetteur (25-E, 26-E) et dont la deuxième entrée de signal (37, 39) reçoit à chaque fois un signal de transmission logiquement récessif et
comprenant deux multiplexeurs d'émission (34, 35) dont la sortie de signal (49, 44) est raccordée à chaque fois à un émetteur de récepteur-émetteur (25-S, 26-S) et dont la première entrée de signal (47, 42) est raccordée à chaque fois avec une sortie de signal (40, 45) du multiplexeur de réception (32, 33) pour le récepteur de récepteur-émetteur (25-E, 26-E) de l'autre récepteur-émetteur, un signal de transmission logiquement récessif étant appliqué à chaque fois à la deuxième entrée de signal des deux multiplexeurs d'émission (34, 35).

2. Circuit de protection selon la revendication 1,
**caractérisé en ce que**
le circuit d'isolation logique (29) sépare le sous-réseau reconnu comme défectueux du système de bus en bloquant un signal de transmission dominant venant du ou allant vers le sous-réseau.

3. Circuit de protection selon la revendication 1 ou 2,
**caractérisé en ce que**
le circuit de d'isolation logique (29) est relié avec des noeuds de commande (3, 4, 5) du réseau de système de bus via un bus d'erreurs, les noeuds de commande (3, 4, 5) recevant des données d'information via le bus d'erreurs (24), celles-ci signalent une séparation du sous-réseau reconnu comme défectueux du réseau de système de bus global.

4. Circuit de protection selon l'une quelconque des revendications précédentes,
**caractérisé en ce que**
la première entrée de signal (47, 42) du multiplexeur d'émission (34, 35) est reliée à chaque fois avec les sorties de signal du multiplexeur de réception (32, 33) de façon galvaniquement découplée.

5. Circuit de protection selon l'une quelconque des revendications précédentes,
**caractérisé en ce que**
le système de bus à accès arbitré est un système de bus CAN, un système de bus J 1850 ou un système de bus CSMA.
